# EUROPEAN PATENT APPLICATION

(11) **EP 1 079 576 A2**
(43) Date of publication of application: **28.02.2001**
(21) Application number: 00117341.8
(22) Date of filing: 22.08.2000
(51) Int. Cl.: H04L 27/26

(54) **Multicarrier receiver with direct extraction of a control signal**

(30) Priority: 25.08.1999 JP 23820299
(71) Applicant: MATSUSHITA ELECTRIC INDUSTRIAL CO., LTD., Kadoma-shi, Osaka-fu 571-8501 (JP)
(72) Inventor: Tanaka, Koichiro, Takaraduka-shi, Hyogo-ken (JP); Kimura, Tomohiro, Hirakata-shi, Osaka-fu (JP); Nakahara, Hideki, Kyoto-shi, Kyoto-fu (JP); Shirakata, Naganori, Suita-shi, Osaka-fu (JP); Harada, Yasuo, Kobe-shi, Hyogo-ken (JP)
(74) Representative: Lang, Johannes, Dipl.-Ing.

(57) **Abstract**

A control signal reproducer (141) directly reproduces a control signal from a received OFDM signal without performing Fourier transform, thereby providing the control signal to each component more quickly. A Fourier transformer (1) performs Fourier transform on the received OFDM signal A data demodulator (3), a deinterleaver (4), and an error corrector (5) performs demodulation, deinterleave, and error correction, respectively, based on a modulation scheme, interleave depth, and error correction type specified by the control signal reproduced by the control signal reproducer (141), thereby obtaining demodulated data. In this manner, transmission efficiency of the OFDM signal can be improved with a simple structure, and a transmission delay can be reduced.

## Description

### BACKGROUND OF THE INVENTION

### Field of the Invention

The present invention relates to OFDM signal transmission systems using a control signal, and apparatuses and methods related thereto, and more specifically, to an OFDM signal transmission system that specifies a transmission parameter such as a type of error correction, interleave depth, and modulation scheme by transmitting an OFDM symbol corresponding to the control signal, and an apparatus and method related thereto.

### Description of the Background Art

Generally, in radio or wired transmission systems, a transmission parameter such as a data encoding method and modulation scheme may be changed based on the importance of data to be transmitted or the condition of a transmission path. In this case, both transmitting and receiving sides have to obtain, in advance, information about the change of the transmission parameter to carry out data processing based on the changed parameter.

Conventionally, information about the changed transmission parameter to be changed is transmitted in advance from the transmitting side to the receiving side as a control signal. Also in orthogonal frequency division multiplex (hereinafter referred to as OFDM) transmission, transmission parameters can be changed in a similar manner.

In the OFDM transmission scheme, information is transmitted by putting data on a plurality of subcarriers orthogonal to each other and multiplexing all subcarriers at once. Particularly, this OFDM scheme can reduce interference between symbols due to delay waves. To modulate each subcarrier, QPSK or multilevel QAM is used.

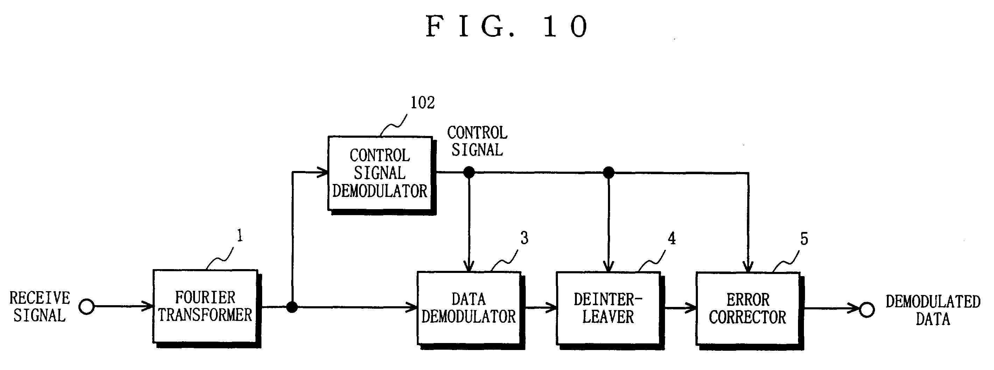

FIG. 10 is a block diagram showing the structure of a conventional OFDM signal demodulation unit capable of specifying a transmission parameter with a control signal. In FIG. 10, the conventional OFDM signal demodulation unit includes a Fourier transformer 1, a data demodulator 3, a deinterleaver 4, an error corrector 5, and a control signal demodulator 102. The operation of this demodulation unit is now described below.

In FIG. 10, the demodulation unit is provided with a receive signal with a preamble, control symbols, and data symbols multiplexed in this order. This receive signal is composed of two data sequences; I-axis data and Q-axis data. The OFDM signal sent out from the transmitting side is received, converted into an IF signal, and then separated through quadrature detection into these two data sequences by the receiving side. Note that, although not shown, the demodulation unit is further provided with a symbol synchronization signal and a clock signal both generated from the receive signal itself by a timing signal generator in the receiving side. Each component constructing the demodulation unit carries out data processing based on the symbol synchronization signal and the clock signal.

In FIG. 10, the control symbols and the data symbols to be inputted are OFDM symbols. These OFDM symbols are generated as such that each different data is carried on each of subcarriers composing each symbol and then subjected to inverse-Fourier transform. To extract the information carried on each subcarrier, these OFDM symbols have to be subjected to Fourier transform.

The Fourier transformer 1 performs Fourier transform on the receive signal, and then supplies the same to the control signal demodulator 102 and the data demodulator 3. The control signal demodulator 102 demodulates the control symbol part of the Fourier transform output supplied by the Fourier transformer 1 to reproduce the control signal. The control signal demodulator 102 then feeds the control signal to the data demodulator 3, the deinterleaver 4, and the error corrector 5.

The data demodulator 3, the deinterleaver 4, and the error corrector 5 perform demodulation, deinterleaving, and error correction, respectively, on the data symbol part of the Fourier transform output supplied by the Fourier transformer 1 to produce demodulated data.

As stated above, in the conventional OFDM signal transmission system, the control symbols are subjected to Fourier transform and then demodulated in the control signal demodulator 102 before the control signal is fed to the data demodulator 3 and thereafter. On the other hand, the data symbols are supplied to the data demodulator 3 immediately after these data symbols are subjected to Fourier transform.

Data processing in the data demodulator 3 and thereafter requires the control signal. Therefore, the control signal has to be fed to these components before the data symbols are supplied thereto. However, if the demodulation unit receives the data symbols immediately after the control symbols, the data symbols are supplied to the data demodulator 3 while the control signal is being demodulated in the control signal demodulator 102. Therefore, the transmission data cannot be correctly demodulated.

Thus, the time when the data symbols are supplied to the data demodulator 3 has to be delayed by the time required to demodulate the control symbols. For this purpose, two methods have been taken. A first method is to leave space between the control symbols and the data symbols in the OFDM signal for the time required to demodulate the control signal. A second method is to provide buffer memory before the data demodulator 3 to temporarily store the data symbols. Thus, inputting the data symbols to the data demodulator 3 is delayed for the time required to demodulate the control signal.

Disadvantageously, however, transmission efficiency is reduced in the first method, while an additional storage device is required in the second method. Furthermore, the start time for transmitting the data symbols is delayed in the first method, while the start time for demodulating the data symbols is delayed in the second method. Due to such delay, it takes longer to modulate the transmission data part by the transmitting side and then demodulate the same by the receiving side, resulting in an increase in transmission delay.

### SUMMARY OF THE INVENTION

Therefore, an object of the present invention is to provide an OFDM signal transmission system that improves transmission efficiency and dispenses with an additional storage device, resulting in reduction in transmission delay, and an apparatus and method related thereto.

The present invention has the following features to achieve the object above.

A first aspect of the present invention is directed to a system for transmitting an OFDM signal from a transmitting device to a receiving device,
the transmitting device comprising:
a modulator for generating an OFDM signal by multiplexing, on a time axis, an OFDM symbol corresponding to transmission data and an OFDM symbol corresponding to a control signal for specifying a transmission parameter; and
a transmitter for transmitting the OFDM signal generated by the modulator to the receiving device,
the modulator generating the OFDM symbol corresponding to the control signal by uniformly modulating subcarriers with one complex signal based on said control signal,
the receiving device comprising:
a receiver for receiving the OFDM signal transmitted from the transmitting device; and
a demodulator for demodulating the OFDM signal received by the receiver, and
the demodulator comprising:
a control signal reproducer for directly reproducing the control signal from the OFDM signal received by the receiver without performing Fourier transform; and
a transmission data demodulator for reproducing the transmission data from the OFDM signal received by the receiver based on the control signal reproduced by the control signal reproducer through processing including Fourier transform.

As described above, in the first aspect, the receiving side can directly reproduce the control signal from the receive signal without Fourier transform. Thus, the control signal can be supplied to each data processing unit in the receiving side earlier than the transmission data, allowing demodulation without delaying the transmission data. Therefore, the transmission efficiency can be improved, an additional storage device is not required, and as a result, the transmission delay can be reduced.

According to a second aspect of the present invention, in the first aspect,
the transmission parameter specified by the control signal includes at least one of parameters indicating a modulation scheme, interleave depth, and error correction type.

As described above, in the second aspect, the same effects can be obtained as those of the first aspect when the control signal specifies at least one of the modulation scheme, interleave depth, and error correction type.

A third aspect of the present invention is directed to an OFDM signal modulation device for generating an OFDM signal including transmission data and a control signal, the device comprising:
transmission data modulation means individually modulating subcarriers composing an OFDM symbol with complex signals based on the transmission data to produce a transmission-data-modulated signal;
control signal modulation means uniformly modulating the subcarriers composing the OFDM symbol with one complex signal based on the control signal to produce a control-signal-modulated signal; and
OFDM signal generation means generating, based on the transmission-data-modulated signal and the control-signal-modulated signal, an OFDM signal with a transmission data part including the transmission data and a control signal part including the control signal multiplexed on a time axis.

As described above, in the third aspect, the OFDM symbol allowing direct reproduction of the control signal without Fourier transform can be multiplexed with the transmission data part. Such OFDM signal generated in the above described manner can be transmitted to the receiving side without the control signal part and the data signal part spaced apart. Thus, the transmission efficiency can be improved, and the transmission delay can be reduced.

A fourth aspect of the present invention is directed to an OFDM signal demodulation device for demodulating a received OFDM signal to reproduce transmission data, the demodulation device comprising:
control signal reproduction means directly reproducing a control signal from the OFDM signal without Fourier transform; and
transmission data reproduction means reproducing the transmission data from the OFDM signal through processing including Fourier transform based on a transmission parameter indicated by the control signal reproduced by the control signal reproduction means.

As described above, in the fourth aspect, the control signal is reproduced from the received OFDM signal without Fourier transform. The control signal thus can be fed to each data processing unit earlier than the transmission data part of the receive signal. This allows demodulation without the transmission data part being delayed even if the transmission data part is received immediately after the control signal part. Therefore, an additional storage device is not required, and the transmission delay can be reduced.

According to a fifth aspect, in the fourth aspect,
the control signal reproduction means comprises:
correlation means calculating a correlation value between an OFDM symbol corresponding to the control signal included in the received OFDM signal and a time-domain reference signal previously provided; and
a determination means determining a phase and an amplitude both indicated by the correlation value calculated by the correlation means to reproduce the control signal.

As described above, in the fifth aspect, by carrying out known correlation operation, the control signal can be directly reproduced from the received OFDM signal without Fourier transform. Therefore, the same effects can be achieved as those of the fourth aspect.

According to a sixth aspect, in the fourth aspect, the transmission data reproduction means comprises:
Fourier transform means performing Fourier transform on the received OFDM signal;
data demodulation means demodulating an output from the Fourier transform means;
deinterleave means deinterleaving an output from the data demodulation means; and
error correction means performing error correction on an output from the deinterleave means.

As described above, in the sixth aspect, the same effects can be achieved as those of the fourth aspect when the transmission data is subjected to demodulation, deinterleave, and error correction according to the modulation scheme, interleave depth, and error correction type indicated by the control signal transmitted from the transmitting side.

A seventh aspect of the present invention is directed to an OFDM signal transmission device for transmitting an OFDM signal including transmission data and a control signal, the transmission device comprising:
transmission data modulation means individually modulating subcarriers composing an OFDM symbol with complex signals based on the transmission data to generate a transmission-data-modulated signal;
control signal modulation means uniformly modulating the subcarriers composing the OFDM symbol with one complex signal based on the control signal to generate a control-signal-modulated signal;
OFDM signal generation means generating, based on the transmission-data-modulated signal and the control-signal-modulated signal, an OFDM signal with a transmission data part including the transmission data and a control signal part including the control signal multiplexed on a time axis; and
transmission means transmitting the OFDM signal generated by the OFDM signal generation means.

As described above, in the seventh aspect, the OFDM symbol allowing direct reproduction of the control signal without Fourier transform can be multiplexed with the transmission data part and transmitted. Therefore, the signal can be transmitted without the control signal part and the data signal part spared apart. Thus, the transmission efficiency can be improved, and the transmission delay can be reduced.

An eighth aspect of the present invention is directed to an OFDM signal receiving device for receiving an OFDM signal and reproducing transmission data, the receiving device comprising:
receiving means receiving the OFDM signal;
control signal reproduction means directly reproducing a control signal from the OFDM signal received by the receiving means without Fourier transform; and
transmission data reproduction means reproducing the transmission data from the OFDM signal received by the receiving means based on a transmission parameter indicated by the control signal reproduced by the control signal reproduction means.

As described above, in the eighth aspect, the control signal is reproduced from the received OFDM signal without Fourier transform. Therefore, the control signal can be reproduced, and then fed to each data processing means earlier than the transmission data part of the receive signal. Consequently, demodulation can be made without the transmission data part being delayed even when the transmission data part is received immediately after the control signal part. Thus, an additional storage device is not required, and the transmission delay can be reduced.

According to a ninth aspect, in the eighth aspect,
the control signal reproduction means comprises:
correlation means calculating a correlation value between an OFDM symbol corresponding to the control signal included in the OFDM signal received by the receiving means and a time-domain reference signal previously provided; and
determination means determining a phase and an amplitude both indicated by the correlation value calculated by the correlation means to reproduce the control signal.

According to a tenth aspect, in the eighth aspect,
the transmission data reproduction means comprises:
Fourier transform means performing Fourier transform on the OFDM signal received by the receiving means;
data demodulation means demodulating an output from the Fourier transform means;
deinterleave means deinterleaving an output from the data demodulation means; and
error correction means performing error correction on an output from the deinterleave means.

An eleventh aspect of the present invention is directed to an OFDM signal modulation method of generating an OFDM signal including transmission data and a control signal, the method comprising the steps of:
individually modulating subcarriers composing an OFDM symbol with complex signals based on the transmission data to generate a transmission-data-modulated signal;
uniformly modulating the subcarriers composing the OFDM symbol with one complex signal based on the control signal to generate a control-signal-modulated signal; and
generating, based on the transmission-data-modulated signal and the control-signal-modulated signal, an OFDM signal with a transmission data part including the transmission data and a control signal part including the control signal multiplexed on a time axis.

A twelfth aspect of the present invention is directed to an OFDM signal demodulation method of demodulating a received OFDM signal to reproduce transmission data, the demodulation method comprising the steps of:
directly reproducing a control signal from the OFDM signal without Fourier transform; and
reproducing the transmission data from the OFDM signal through processing including Fourier transform based on a transmission parameter indicated by the control signal.

According to a thirteenth aspect of the present invention, in the twelfth aspect,
the control signal reproducing step comprises the steps of:
calculating a correlation value between an OFDM symbol corresponding to the control signal included in the received OFDM signal and a time-domain reference signal previously provided; and
determining a phase and an amplitude both indicated by the correlation value to reproduce the control signal.

According to a fourteenth aspect of the present invention, in the twelfth aspect,
the transmission data reproducing step comprises the steps of:
performing Fourier transform on the receive OFDM signal;
demodulating a resultant Fourier transform output;
deinterleaving a resultant demodulation output; and
performing error correction on a resultant deinterleave output.

A fifteenth aspect of the present invention is directed to an OFDM signal transmission method of transmitting an OFDM signal including transmission data and a control signal, the transmission method comprising the steps of:
individually modulating subcarriers composing an OFDM symbol with complex signals based on the transmission data to generate a transmission-data-modulated signal;
uniformly modulating the subcarriers composing the OFDM symbol with one complex signal based on the control signal to generate a control-signal-modulated signal;
generating, based on the transmission-data-modulated signal and the control-signal-modulated signal, an OFDM signal with a transmission data part including the transmission data and a control signal part including the control signal multiplexed on a time axis; and
transmitting the OFDM signal.

A sixteenth aspect of the present invention is directed to an OFDM signal receiving method of receiving an OFDM signal and reproducing transmission data, the receiving method comprising the steps of:
receiving the OFDM signal;
directly reproducing a control signal from the OFDM signal without Fourier transform; and
reproducing the transmission data from the OFDM signal based on a transmission parameter indicated by the control signal.

According to a seventeenth aspect of the present invention, in the sixteenth aspect,
the control signal reproducing method comprises the steps of:
calculating a correlation value between an OFDM symbol corresponding to the control signal included in the OFDM signal and a time-domain reference signal previously provided; and
determining a phase and an amplitude of the control signal both indicated by the correlation value to reproduce the control signal.

According to an eighteenth aspect of the present invention, in the sixteenth aspect,
the transmission data reproducing step comprises the steps of:
performing Fourier transform on the OFDM signal;
demodulating a resultant Fourier transform output;
deinterleaving a resultant demodulation output; and
performing error correction on a resultant deinterleave output.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing the configuration of an OFDM signal transmission system according to one embodiment of the present invention;
FIG. 2 is a diagram showing one example of the structure of an OFDM signal to be transmitted from a transmitting side to a receiving side in the OFDM signal transmission system according to the embodiment of the present invention;
FIG. 3 is a block diagram showing the structure of a modulation unit provided on the transmitting side in the OFDM signal transmission system according to the embodiment of the present invention;
FIG. 4 is a block diagram showing one part of the structure of the modulation unit shown in FIG. 3 in more detail;
FIG. 5 is a block diagram showing another part of the structure of the modulation unit shown in FIG. 3 in more detail;
FIG. 6A is a diagram for explaining characteristics of a time-domain reference signal in the OFDM signal transmission system according to the embodiment of the present invention;
FIG. 6B is a diagram for explaining characteristics of an OFDM signal corresponding to a control signal transmitted from the transmitting side to the receiving side;
FIG. 7 is a block diagram showing a demodulation unit provided on the receiving side in the OFDM signal transmission system according to the embodiment of the present invention;
FIG. 8 is a block diagram showing part of the structure of the demodulation unit shown in FIG. 7 in more detail;
FIG. 9A is a diagram exemplarily showing signal receiving timing, Fourier transformation output timing, control signal demodulation timing, and data demodulation input timing in a conventional OFDM signal transmission system;
FIG. 98 is a diagram exemplarily showing signal receiving timing, Fourier transformation output timing, control signal demodulation timing, and data demodulation input timing in the OFDM signal transmission system of the present invention; and
FIG. 10 is a block diagram showing the structure of the conventional OFDM signal demodulation unit capable of specifying a transmission parameter using a control signal.

### DESCRIPTION OF THE PREFERRED EMBODIMENT

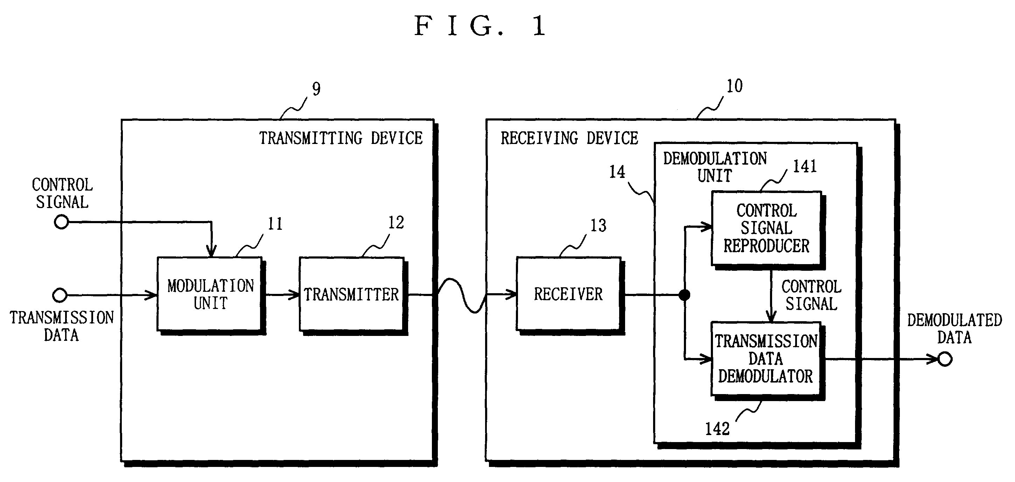

With reference to FIGS. 1 to 9B, one embodiment of an OFDM signal transmission system using a control signal, and its modulation and demodulation units of the present invention are now described below.

FIG. 1 is a block diagram showing the configuration of the OFDM signal transmission system according to the embodiment of the present invention.

In FIG. 1, the transmission system includes a transmitting device 9 and a receiving device 10. The transmitting device 9 includes a modulation unit 11 and a transmitter 12, while the receiving device 10 includes a receiver 13 and a demodulation unit 14. The demodulation unit 14 includes a control signal reproducer 141 and a transmission data demodulator 142.

With reference to FIG. 1, the operation of the transmission system is now described below.

In the transmitting device 9, the modulation unit 11 is provided with transmission data and a control signal. The modulation unit 11 then produces a transmission signal by multiplexing OFDM symbols corresponding to these supplied signals on a time axis. The transmitter 12 converts the transmission signal produced by the modulation unit 11 into a high-frequency OFDM signal, and then transmits the OFDM signal to the receiving device 10.

In the receiving device 10, the receiver 13 receives the OFDM signal transmitted from the transmitting device 9 to produce a receive signal. The control signal reproducer 141 reproduces the control signal from the receive signal received by the receiver 13. The transmission data demodulator 142 reproduces the transmission data from the receive signal received by the receiver 13 based on the control signal reproduced by the control signal reproducer 141.

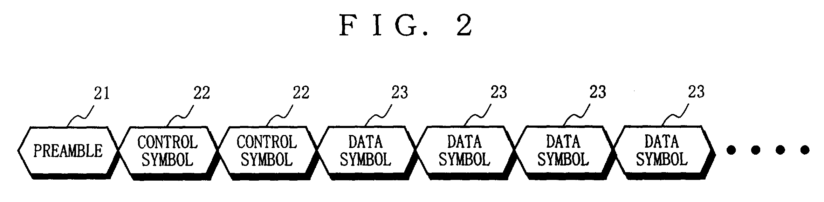

FIG. 2 is a diagram showing one example of the structure of the OFDM signal to be transmitted from the transmitting side to the receiving side in the OFDM signal transmission system according to the embodiment of the present invention. As shown in FIG. 2, from the transmitting side to the receiving side, a preamble 21 is first transmitted, then control symbols 22, and lastly data symbols 23.

The preamble 21 includes a reference signal required at demodulation for estimating timing, frequencies, and phases of the control symbols 22 and the data symbols 23. The control symbols 22 are OFDM symbols that correspond to the control signal for specifying a transmission parameter such as a modulation scheme, interleave depth, and error correction type required for demodulation for the data symbols 23. The data symbols 23 are OFDM symbols that correspond to the transmission data.

Note that, as will be described later, the transmission data is distributed among the subcarriers composing the data symbols 23, while the same control signal is carried on all subcarriers composing the control symbols 22.

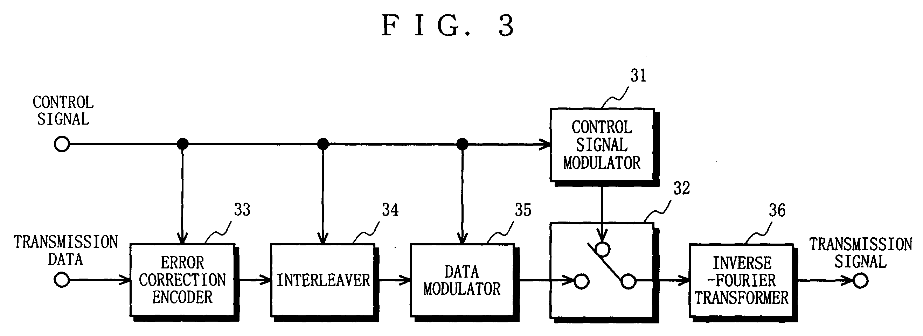

FIG. 3 is a block diagram showing the structure of the modulation unit 11 provided on the transmitting side in the OFDM signal transmission system according to the embodiment of the present invention. In FIG. 3, the modulation unit 11 includes a control signal modulator 31, a switch 32, an error correction encoder 33, an interleaver 34, a data modulator 35, and an inverse Fourier transformer 36.

As stated above, the modulation unit 11 is provided with the control signal and the transmission data. The control signal is to control the components in the transmitting and receiving sides based on the transmission parameter optimized as required. Such control signal is provided to the control signal modulator 31, the error correction encoder 33, the interleaver 34, and the data modulator 35. The transmission data is provided to the error correction encoder 33. Note that, although not shown, the modulation unit 11 is further provided with a symbol synchronization signal and a clock signal generated by a timing signal generator in the transmitting side. Each component in the modulation unit carries out data processing based on the symbol synchronization signal and the clock signal.

The control signal modulator 31 divides the control signal into bit strings of a predetermined number of bits. The control signal modulator 31 further converts the bit strings into their respective complex numbers assigned in advance on a complex plane for every bit string pattern. Further, the control signal modulator 31 modulates all subcarriers at once with each of the complex numbers corresponding to the control signal.

The error correction encoder 33 performs error correction encoding on the transmission data based on the error correction type indicated by the control signal.

The interleaver 34 interleaves an encoded output from the error correction encoder 33 based on the interleave depth indicated by the control signal.

The data modulator 35 divides an interleave output from the interleaver 34 into bit strings of a predetermined number of bits based on the modulation scheme indicated by the control signal. The data modulator 35 then individually converts the bit strings into their respective complex numbers assigned in advance on a complex plane for every bit string pattern. Further, the data modulator 35 modulates the subcarriers with their respective complex numbers corresponding to the transmission data.

The switch 32 first selects a modulation output from the control signal modulator 31, and then selects a modulation output from the data modulator 35.

The inverse Fourier transformer 36 applies inverse Fourier transform to the modulation output selected by the switch 32 to produce the transmission signal.

The transmission signal outputted from the modulation unit 11 is composed of complex numbers having two sequences of data; I- axis data and Q-axis data. The data of two sequences is subjected to quadrature modulation in the transmitter 12 shown in FIG. 1 to be converted into an IF signal, and further an RF signal to be transmitted to the receiving side.

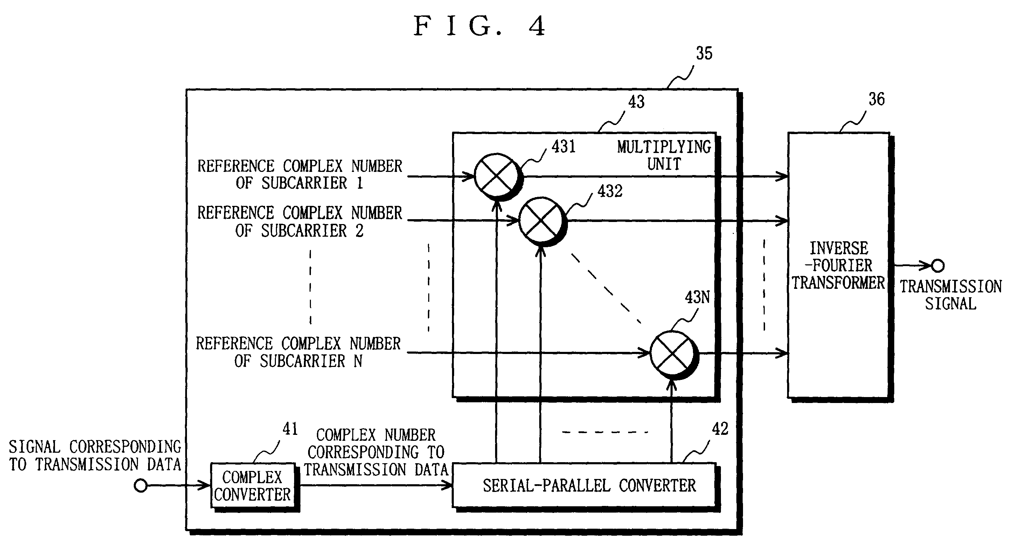

Next, with reference to FIG. 4, the processing of the data modulator 35 through the inverse Fourier transformer 36 is now described below in more detail. Note that, although not shown in FIG. 4, it is assumed that the switch 32 selects the modulation output from the data modulator 35.

In FIG. 4, the data modulator 35 includes a complex converter 41, a serial-parallel converter 42, and a multiplying unit 43. The multiplying unit 43 is composed of multipliers 431 to 43N. The complex converter 41 converts the interleave output of the transmission data provided by the interleaver 34 into a series of complex numbers according to the modulation scheme indicated by the control signal. The serial-parallel converter 42 separates the complex numbers outputted in serial from the complex converter 41 for the number of subcarriers, and then outputs them in parallel with respect to each subcarrier. Each multiplier 431 to 43N multiplies each reference complex number previously provided for each subcarrier by the complex number of each subcarrier outputted from the serial-parallel converter 42 to produce a complex number corresponding to each subcarrier after modulation. Each subcarrier is assigned a predetermined frequency. The inverse Fourier transformer 36 performs inverse Fourier transform on the complex number corresponding to each modulated subcarrier outputted from the multiplying unit 43 as a value at the frequency assigned to each subcarrier to produce complex numbers indicating a time-domain signal.

In other words, the processing shown in FIG. 4 for the signal corresponding to the transmission data is the same as the conventional processing for OFDM signal generation.

In brief, in the processing of FIG. 4, the phase and amplitude of each subcarrier are modulated by the phase and amplitude of the transmission data for obtaining the phase and amplitude of each modulated subcarrier. The phase and amplitude of each modulated subcarrier on the frequency axis are subjected to inverse Fourier transform for obtaining the phase and amplitude of the signal varying in the time domain.

In actual processing, the phase and amplitude are represented by complex numbers indicating locations corresponding thereto on the complex plane. Modulation process is multiplication between these complex numbers. In other words, the above-described processing corresponds to the processing in which the reference complex number of each subcarrier is multiplied by the complex number of the transmission data, and subjected to inverse Fourier transform to obtain a complex number in the time domain.

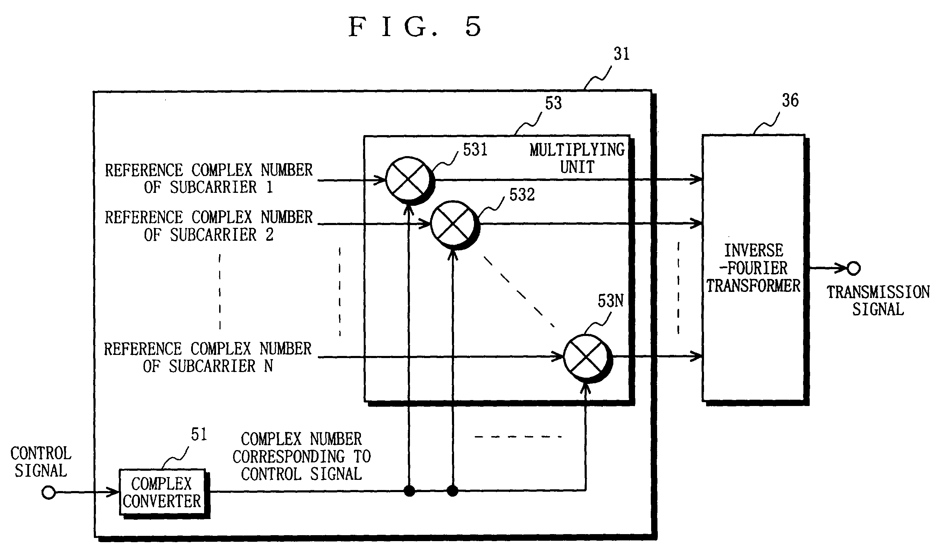

Next, with reference to FIG. 5, the processing of the control signal modulator 31 through the inverse Fourier transformer 36 is now described below in more detail. Note that, although not shown in FIG. 5, it is assumed that the switch 32 selects the modulation output from the control signal modulator 31.

In FIG. 5, the control signal modulator 31 includes a complex converter 51 and a multiplying unit 53. The multiplying unit 53 is composed of multipliers 531 to 53N. The complex converter 51 converts the control signal into a series of complex numbers. Each multiplier 531 to 53N is provided with the same complex number obtained by conversion in the complex converter 51. Each multiplier 531 to 53N multiplies each reference complex number previously provided for each subcarrier by the complex number to produce a complex number corresponding to each subcarrier after modulation. Note that these reference complex numbers may be the same as those for use in the data modulator 35. Each subcarrier is assigned a predetermined frequency. The inverse Fourier transformer 36 performs inverse Fourier transform on the complex number corresponding to each modulated subcarrier outputted from the multiplying unit 53 to produce complex numbers indicating a time-domain signal.

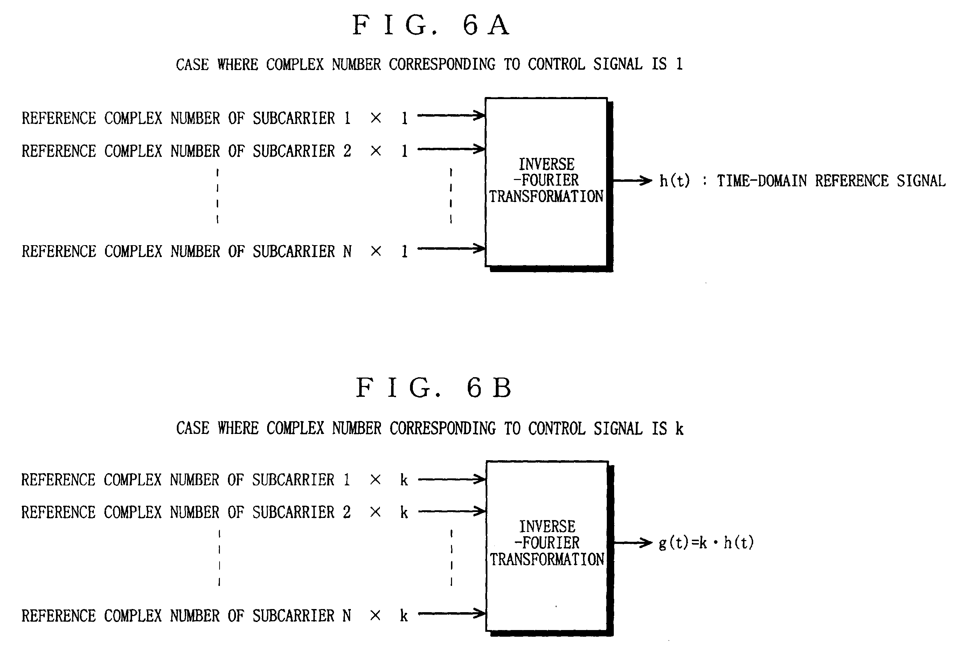

Next, with reference to FIGS. 6A and 6B, the characteristics of the time-domain signal outputted from the inverse Fourier transformer 36 in FIG. 5 is now described below.

First, as shown in FIG. 6A, when 1 is provided to each multiplier 531 to 53N as the complex number corresponding to the control signal in FIG. 5, a time-domain signal h(t) is produced by the inverse Fourier transformer 36, which is hereinafter referred to as a time-domain reference signal.

Then, as shown in FIG. 6B, when k is provided to each multiplier 531 to 53N as the complex number corresponding to the control signal in FIG. 5, each value on the frequency axis provided to the inverse Fourier transformer 36 becomes k times as large as that in the case of FIG. 6A. Here, inverse Fourier transform is linear operation. If all input values are multiplied by k, an output value is also multiplied by k accordingly. Therefore, when the complex number corresponding to the control signal is k, a time-domain signal g(t) outputted from the inverse Fourier transformer 36 becomes k · h(t), which is equal to the signal obtained by multiplexing the time-domain reference signal h(t) by k.

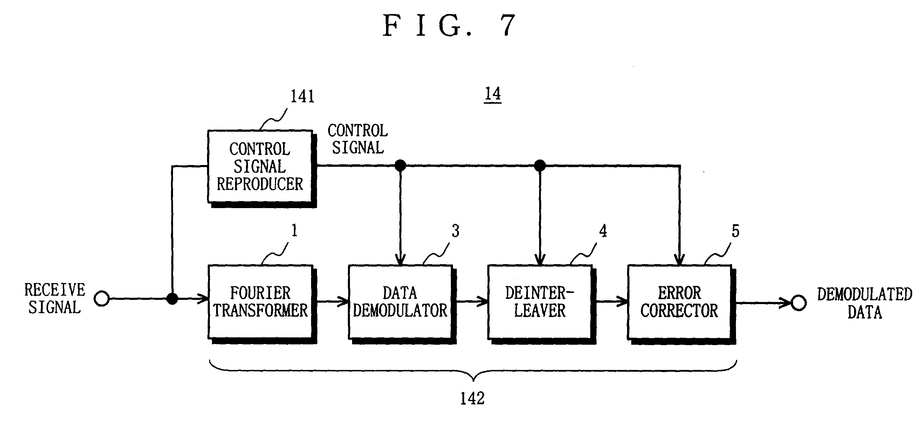

FIG. 7 is a block diagram showing the demodulation unit 14 provided on the receiving side in the OFDM signal transmission system according to the embodiment of the present invention. As stated above, the demodulation unit 14 includes the control signal reproducer 141 and the transmission data demodulator 142. The transmission data demodulator 142 includes the Fourier transformer 1, the data demodulator 3, the deinterleaver 4, and the error corrector 5.

The OFDM signal demodulation unit shown in FIG. 7 is different only in the following respect from the conventional one shown in FIG. 10: the control signal demodulator 102 of FIG. 10 reproduces the control signal after the receive signal is subjected to Fourier transform. On the other hand, the control signal demodulator 141 of FIG. 7 reproduces the control signal while the receive signal is not subjected to Fourier transform. Therefore, in FIG. 7, the components corresponding to those in FIG. 10 are provided with the same reference numbers, and their description is omitted herein.

In FIG. 7, the demodulation unit 14 is provided with a receive signal. The receive signal is composed of data of two sequences, I-axis data and Q-axis data, separated through quadrature detection after the receiver 13 receives and converts the receive signal into an IF signal.

Note that, although not shown, the demodulation unit 14 is further provided with a symbol synchronization signal and a clock signal generated from the receive signal itself by a timing signal generator in the receiving side. Each component in the demodulation unit 14 carries out data processing based on the symbol synchronization signal and the clock signal.

In FIG. 7, the demodulation unit 14 first receives control symbols, and then data symbols immediately thereafter. The control signal reproducer 141 reproduces the control signal from the control symbol part of the receive signal, which will be described later in more detail. The Fourier transformer 1 performs Fourier transform on the data symbol part of the receive signal. The data demodulator 3 demodulates a transform output from the Fourier transformer 1 according to the modulation scheme indicated by the control signal reproduced by the control signal reproducer 141. The deinterleaver 4 deinterleaves a demodulation output from the data demodulator 3 according to the interleave depth indicated by the control signal reproduced by the control signal reproducer 141. The error corrector 5 performs error correction on a deinterleave output from the deinterleaver 4 according to the error correction type indicated by the control signal reproduced by the control signal reproducer 3, and produces demodulation data.

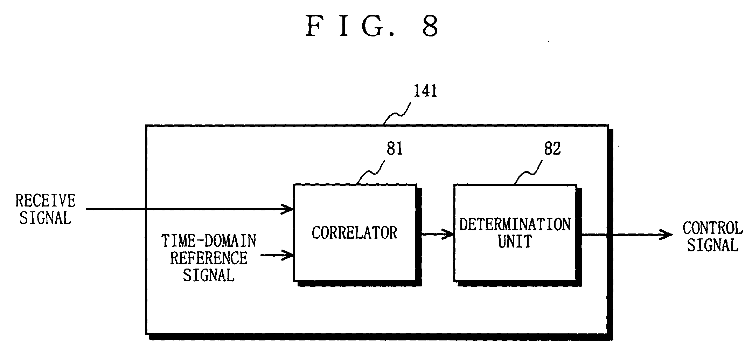

Next, with reference to FIG. 8, the processing of the control signal reproducer 141 in FIG. 7 is now described in more detail.

FIG. 8 is a block diagram showing part of the structure of the demodulation unit 14 shown in FIG. 7. As shown in FIG. 8, the control signal reproducer 141 includes a correlator 81 and a determination unit 82. First, the control signal reproducer 141 is provided with a receive signal. Based on the symbol synchronization signal, the correlator 81 calculates a correlation value between each control symbol in the receive signal and the time-domain reference signal through correlation operation. The determination unit 82 determines the correlation value calculated in the correlator 81 to reproduce the control signal.

Here, as described in FIG. 6A, the time-domain reference signal is the signal h(t) in the time domain outputted from the inverse Fourier transformer 36 when 1 is provided to each multiplier 531 to 53N as the complex number corresponding to the control signal. This signal is represented by a complex number in the time domain. This time-domain reference signal provided in advance to the receiving side is fed to the correlator 81. On the other hand, as described in FIG. 6B, when k is provided as the complex number corresponding to the control signal, the control symbol g(t) becomes the signal k · h(t), which is equal to the signal obtained by multiplying the time-domain reference signal h(t) by k due to linearity of inverse Fourier transform.

The correlator 81 calculates the correlation value between these two complex numbers through correlation operation. More specifically, in correlation operation, the complex number indicated by the receive signal corresponding to the control signal is multiplied by a complex conjugate of the complex number indicated by the time-domain reference signal. Then, the resultant value is integrated for each symbol period. As a result of this operation, a complex number in proportion to the complex number k carried on the control symbol is obtained based on the above-described characteristics of the receive signal corresponding to the control signal. This correlation process in the correlator 81 is known art, and achieved by a multiplier, integrator, and the like.

The determination unit 82 determines a range in which the complex number obtained in the correlator 81 is included on a complex plane. The determination unit 82 then converts the complex number into a bit string corresponding to the determined range for output. The outputted bit strings are the reproduced control signal.

Here, actual processing on the above-described signal represented by a complex number will be described.

The signal represented by a complex number is forwarded with its real-number component and imaginary-number component separated apart. For instance, each of the multipliers 431 to 43N or the multiplier 531 to 53N is provided with a pair of the real and imaginary parts corresponding to the complex numbers of the transmission data or the control data and that of the reference complex number corresponding to each subcarrier. After multiplication of these complex numbers, the resultant complex number is produced with its real and imaginary parts in pair.

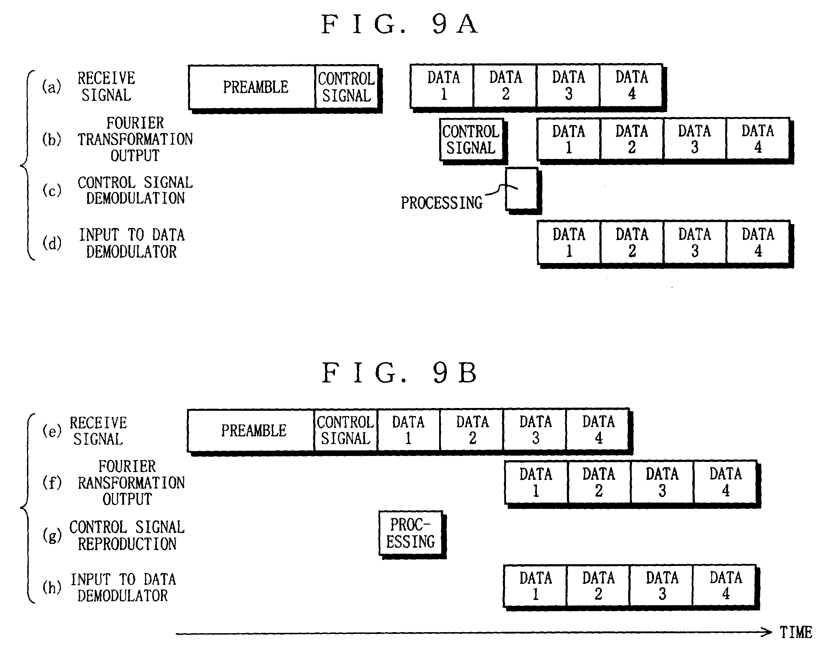

With reference to FIGS. 9A and 9B, the difference between demodulation in the conventional OFDM signal transmission system and demodulation in the OFDM signal transmission system of the present invention is now exemplarily described below. FIG. 9A shows demodulation in the conventional OFDM signal transmission system on the time axis, while FIG. 9B shows demodulation in the OFDM signal transmission system of the present invention on the time axis.

Assume that the receive signal is composed of one 2-symbol-length preamble, one 1-symbol-length control symbol corresponding to the control signal, and four 1-symbol-length data symbols. Also assume that the delay time in Fourier transform is 2 symbol lengths.

Conventionally, the control signal is demodulated after the Fourier transformer outputs the control symbol. Therefore, the data symbols have to be supplied to the data demodulator after demodulation of the control signal is completed. In other words, the data symbol have to be supplied at timing shown in (d) of FIG. 9A. Therefore, as shown in (b) of FIG. 9A, in the Fourier transform output, the control symbol output and the data symbol output have to be spaced apart for a processing time period required for control signal demodulation. Assuming that the data length corresponding to the control signal demodulation time is 0.5 symbol length, as shown in (a) of FIG. 9A, space of 0.5 symbol length has to be provided, which is approximately 7% of the 7-symbol-length receive signal.

In the present invention, the control signal is reproduced immediately after being received as shown in (g) of FIG. 9B. Since the reproduction process includes correlation operation, it takes longer time than the conventional demodulation process, and the reproduction process corresponds to 1 symbol length. Shown in (f) of FIG. 9B shows Fourier transform output. The first data symbol output is provided after demodulation of the control signal is completed. Therefore, Fourier transform output can be used as data demodulation input. Thus, unlike the conventional art, no space is required in the receive signal.

According to this example, in the OFDM signal transmission system of the present invention, transmission efficiency can be improved by approximately 7%, and transmission and demodulation of the data part can be started 0.5 symbol length earlier, compared with the conventional OFDM signal transmission system.

Note that, in the control symbol of the present invention, the same information is carried on all subcarriers composing the OFDM signal. Therefore, a drawback is that transmissible amount of information is reduced compared with the case where each different information is carried on each subcarrier. In general, however, the amount of information of the control signal is substantially smaller than transmission data. Furthermore, even in conventional art, the control symbol is redundantly transmitted by using only part of subcarriers or in a manner that the same information is carried on a plurality of subcarriers to ensure transmission of the control signal. Therefore, the above drawback has little effect on the amount of information transmissible with a normal control signal. Rather, the control symbol of the present invention enables demodulation of the control signal even if the information on one of the subcarrier on the frequency axis is lost during transmission. Therefore, the control symbol of the present invention is suitable for ensuring transmission of the important information on the control signal.

While the invention has been described in detail, the foregoing description is in all aspects illustrative and not restrictive. It is understood that numerous other modifications and variations can be devised without departing from the scope of the invention.

## Claims

1. A system for transmitting an OFDM signal from a transmitting device (9) to a receiving device (10),
said transmitting device comprising:
a modulator (11) for generating an OFDM signal by multiplexing, on a time axis, an OFDM symbol corresponding to transmission data and an OFDM symbol corresponding to a control signal for specifying a transmission parameter; and
a transmitter (12) for transmitting the OFDM signal generated by said modulator to said receiving device,
said modulator generating the OFDM symbol corresponding to said control signal by uniformly modulating subcarriers with one complex signal based on said control signal,
said receiving device comprising:
a receiver (13) for receiving the OFDM signal transmitted from said transmitting device; and
a demodulator (14) for demodulating the OFDM signal received by said receiver, and
said demodulator comprising:
a control signal reproducer (141) for directly reproducing said control signal from the OFDM signal received by said receiver without performing Fourier transform; and
a transmission data demodulator (142) for reproducing said transmission data from the OFDM signal received by said receiver based on the control signal reproduced by said control signal reproducer through processing including Fourier transform.

2. The OFDM signal transmission system according to claim 1, wherein
the transmission parameter specified by said control signal includes at least one of parameters indicating a modulation scheme, interleave depth, and error correction type.

3. An OFDM signal modulation device for generating an OFDM signal including transmission data and a control signal, said device comprising:
transmission data modulation means (35) individually modulating subcarriers composing an OFDM symbol with complex signals based on said transmission data to produce a transmission-data-modulated signal;
control signal modulation means (31) uniformly modulating the subcarriers composing the OFDM symbol with one complex signal based on said control signal to produce a control-signal-modulated signal; and
OFDM signal generation means (32, 36) generating, based on said transmission-data-modulated signal and said control-signal-modulated signal, an OFDM signal with a transmission data part including said transmission data and a control signal part including said control signal multiplexed on a time axis.

4. An OFDM signal demodulation device for demodulating a received OFDM signal to reproduce transmission data, said demodulation device comprising:
control signal reproduction means (141) directly reproducing a control signal from said OFDM signal without Fourier transform; and
transmission data reproduction means (142) reproducing said transmission data from said OFDM signal through processing including Fourier transform based on a transmission parameter indicated by the control signal reproduced by said control signal reproduction means.

5. The OFDM signal demodulation device according to claim 4, wherein
said control signal reproduction means comprises:
correlation means (81) calculating a correlation value between an OFDM symbol corresponding to said control signal included in said received OFDM signal and a time-domain reference signal previously provided; and
a determination means (82) determining a phase and an amplitude both indicated by the correlation value calculated by said correlation means to reproduce said control signal.

6. The OFDM signal demodulation device according to claim 4, wherein
said transmission data reproduction means comprises:
Fourier transform means (1) performing Fourier transform on the received OFDM signal;
data demodulation means (3) demodulating an output from said Fourier transform means;
deinterleave means (4) deinterleaving an output from said data demodulation means; and
error correction means (5) performing error correction on an output from said deinterleave means.

7. An OFDM signal transmission device for transmitting an OFDM signal including transmission data and a control signal, said transmission device comprising:
transmission data modulation means (35) individually modulating subcarriers composing an OFDM symbol with complex signals based on said transmission data to produce a transmission-data-modulated signal;
control signal modulation means (31) uniformly modulating the subcarriers composing the OFDM symbol with one complex signal based on said control signal to produce a control-signal-modulated signal;
OFDM signal generation means (32, 36) generating, based on said transmission-data-modulated signal and said control-signal-modulated signal, an OFDM signal with a transmission data part including said transmission data and a control signal part including said control signal multiplexed on a time axis; and
transmission means (12) transmitting the OFDM signal generated by said OFDM signal generation means.

8. An OFDM signal receiving device for receiving an OFDM signal and reproducing transmission data, said receiving device comprising:
receiving means (13) receiving said OFDM signal;
control signal reproduction means (141) directly reproducing a control signal from the OFDM signal received by said receiving means without Fourier transform; and
transmission data reproduction means (142) reproducing said transmission data from the OFDM signal received by said receiving means based on a transmission parameter indicated by the control signal reproduced by said control signal reproduction means.

9. The OFDM receiving device according to claim 8, wherein
said control signal reproduction means comprises:
correlation means (81) calculating a correlation value between an OFDM symbol corresponding to said control signal included in the OFDM signal received by said receiving means and a time-domain reference signal previously provided; and
determination means (82) determining a phase and an amplitude both indicated by the correlation value calculated by said correlation means to reproduce said control signal.

10. The OFDM receiving device according to claim 8, wherein
said transmission data reproduction means comprises:
Fourier transform means (1) performing Fourier transform on the OFDM signal received by said receiving means;
data demodulation means (3) demodulating an output from said Fourier transform means;
deinterleave means (4) deinterleaving an output from said data demodulation means; and
error correction means performing error correction on an output from said deinterleave means.

11. An OFDM signal modulation method of generating an OFDM signal including transmission data and a control signal, said method comprising the steps of:
individually modulating subcarriers composing an OFDM symbol with complex signals based on said transmission data to produce a transmission-data-modulated signal;
uniformly modulating the subcarriers composing the OFDM symbol with one complex signal based on said control signal to produce a control-signal-modulated signal; and
generating, based on said transmission-data-modulated signal and said control-signal-modulated signal, an OFDM signal with a transmission data part including said transmission data and a control signal part including said control signal multiplexed on a time axis.

12. An OFDM signal demodulation method of demodulating a received OFDM signal to reproduce transmission data, said demodulation method comprising the steps of:
directly reproducing a control signal from said OFDM signal without Fourier transform; and
reproducing said transmission data from said OFDM signal through processing including Fourier transform based on a transmission parameter indicated by the control signal.

13. The OFDM demodulation method according to claim 12, wherein
said control signal reproducing step comprises the steps of:
calculating a correlation value between an OFDM symbol corresponding to said control signal included in said received OFDM signal and a time-domain reference signal previously provided; and
determining a phase and an amplitude both indicated by said correlation value to reproduce said control signal.

14. The OFDM signal demodulation method according to claim 12, wherein
said transmission data reproducing step comprises the steps of:
performing Fourier transform on the received OFDM signal;
demodulating a resultant Fourier transform output;
deinterleaving a resultant demodulation output; and
performing error correction on a resultant deinterleave output.

15. An OFDM signal transmission method of transmitting an OFDM signal including transmission data and a control signal, said transmission method comprising the steps of;
individually modulating subcarriers composing an OFDM symbol with complex signals based on said transmission data to produce a transmission-data-modulated signal;
uniformly modulating the subcarriers composing the OFDM symbol with one complex signal based on said control signal to produce a control-signal-modulated signal;
generating, based on said transmission-data-modulated signal and said control-signal-modulated signal, an OFDM signal with a transmission data part including said transmission data and a control signal part including said control signal multiplexed on a time axis; and
transmitting said OFDM signal.

16. An OFDM signal receiving method of receiving an OFDM signal and reproducing transmission data, said receiving method comprising the steps of:
receiving said OFDM signal;
directly reproducing a control signal from said OFDM signal without Fourier transform; and
reproducing said transmission data from said OFDM signal based on a transmission parameter indicated by said control signal.

17. The OFDM receiving method according to claim 16, wherein
said control signal reproducing method comprises the steps of:
calculating a correlation value between an OFDM symbol corresponding to said control signal included in the OFDM signal and a time-domain reference signal previously provided; and
determining a phase and an amplitude both indicated by said correlation value to reproduce said control signal.

18. The OFDM receiving method according to claim 16, wherein
said transmission data reproducing step comprises the steps of:
performing Fourier transform on said OFDM signal;
demodulating a resultant Fourier transform output;
deinterleaving a resultant demodulation output; and
performing error correction on a resultant deinterleave output.
